**Europäisches Patentamt**

(19) **European Patent Office**

**Office européen des brevets**

(11) Publication number : **0 329 620 B1**

(12) # EUROPEAN PATENT SPECIFICATION

(45) Date of publication of patent specification :
**16.12.92 Bulletin 92/51**

(51) Int. Cl.⁵ : **B60R 5/04**

(21) Application number : **89830043.9**

(22) Date of filing : **07.02.89**

(54) **A device for covering the luggage space of a two-compartment motor car.**

(30) Priority : **11.02.88 IT 6710288**

(43) Date of publication of application :
**23.08.89 Bulletin 89/34**

(45) Publication of the grant of the patent :
**16.12.92 Bulletin 92/51**

(84) Designated Contracting States :
**DE ES FR GB SE**

(56) References cited :
**DE-A- 2 718 837**
**DE-A- 3 613 664**
**US-A- 2 808 290**

(73) Proprietor : **FIAT AUTO S.p.A.**
**Corso Giovanni Agnelli 200**
**I-10135 Torino (IT)**

(72) Inventor : **Trebbi, Giorgio**
**Via Verduia, 8**
**I-10025 Pino Torinese Torino (IT)**
Inventor : **Stacchino, Giuseppe**
**Via Tiepolo, 10**
**I-10024 Moncalieri Torino (IT)**
Inventor : **Castiglia, Luciano**
**Via Pacchiotti, 79**
**I-10146 Torino (IT)**

(74) Representative : **Bosotti, Luciano et al**
**c/o Jacobacci-Casetta & Perani S.p.A. Via**
**Alfieri, 17**
**I-10121 Torino (IT)**

EP 0 329 620 B1

## Description

The subject of the present invention is a device for covering the luggage space of a two-compartment motor car.

Covers for luggage spaces are conventionally formed by rigid shelves which have the disadvantages that they are noisy and are subject to the risk of permanent deformation. Moreover, these rigid shelves do not permit luggage which is higher than the level of the shelf to be placed in the luggage space of the car unless the shelf is removed and concealment of the load is relinquished.

A flexible covering device is known from DE-A-3613664, comprising a flexible sheet, three rigid support rods arranged transverse the sheet, of which the first two are fitted to the ends of the sheet and the third acts as a return for the positioning of the sheet in a folded configuration, and means for the releasable connection of the support rods to the structure of a car, which are arranged to keep the sheet in a horizontal position over the luggage space in the folded configuration, with the first two rods situated at the rear and substantially at the same level as the third rod.

The object of the present invention is to provide a simple, versatile and functional covering device which at the same time can carry out additional functions of containment and protection.

According to the invention, this object is achieved by means of the features set forth in the characterising part of Claim 1.

By virtue of this concept, the covering device according to the invention on the one hand does not have the problem of being noisy, and on the other hand has greater functional effectiveness, as well as flexibility of use, compared with conventional covering device. In fact, the flexible-sheet conformation of the device, together with the variability of the arrangement of its support rods, enables both the retention of the operative function of the device, even with bulky luggage projecting above the normal level of the sheet, since it is possible to deform the latter into concave configurations, and the use of the sheet in a convex bag-like configuration for containing delicate objects. Moreover, in the angled configuration with the layers of the sheet at right angles, as well as its normal covering function, the device is also able to fulfil the additional function of separation between the passenger compartment and the luggage space of the car, as well as that of a sun-blind.

Furthermore, the covering device may easily be removed and taken away from the car and possibly used as a container for the carrying of the luggage by hand.

The invention will become clear from the detailed description which follows with reference to the appended drawings, provided by way of non-limiting example, in which:

Figure 1 is a schematic perspective view of a two-compartment motor car provided with a covering device according to the invention, shown in a first operative configuration,

Figure 2 is a cross-section taken on the line II-II of Figure 1, on an enlarged scale,

Figure 3 is a view similar to Figure 1 with the covering device shown in a second operative configuration,

Figure 4 is a cross-section taken on the line IV-IV of Figure 3, on an enlarged scale,

Figure 5 is a view similar to Figure 1 with the covering device shown in a third operative configuration,

Figure 6 is a cross-section taken on the line VI-VI of Figure 5, on an enlarged scale;

Figure 7 is a view similar to Figure 1 with the covering device shown in a fourth operative configuration, and

Figure 8 is a cross-section taken on the line VIII-VIII of Figure 1, on an enlarged scale.

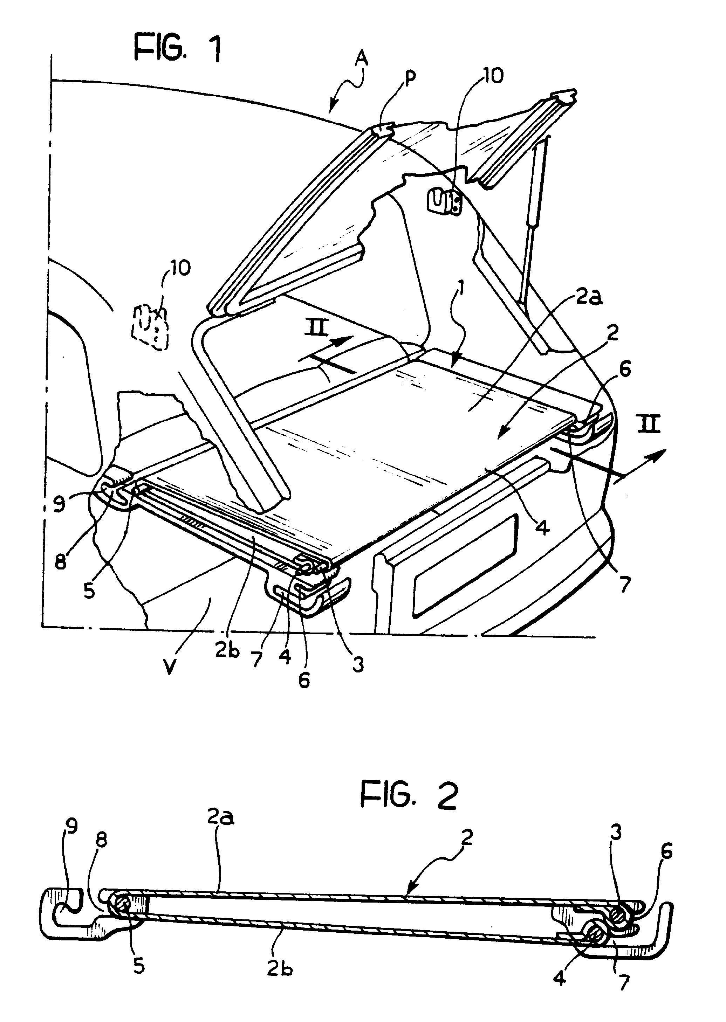

With reference initially to Figure 1, the rear part of a two-compartment motor is schematically indicated A and has a luggage space V which is normally accessible through a rear hatch P.

A device according to the invention for covering the luggage space V is generally indicated 1. The covering device 1 comprises essentially a flexible sheet 2 and three rigid support rods 3, 4 and 5 of which the first two are fixed to the ends of the flexible sheet 2 with the possible interposition of a soft tubular covering, not illustrated in the drawings.

The third rod 5 acts, in the configuration shown in Figures 1 and 2, as a transverse return element for the positioning of the sheet in a folded condition with two superposed adjacent layers 2a and 2b.

The support rods 3, 4 and 5 are connected to the structure of the car A in a rapidly removable manner by means of respective rear and front attachments 6, 7 and 8. These attachments may have the generally cradle-like configuration shown in Figure 2 or may have alternative equivalent configurations suitable for carrying out the same function of removable retention of the ends of the corresponding rods.

Two further attachments 9 are associated with the two attachments of the rear pair 8, and a pair of auxiliary attachments 10 are provided above the rear attachments 8. The function of the attachments 9 and 10 will be described in detail below.

In the configuration of Figures 1 and 2, in which, as stated, the sheet 1 has two superposed layers 2a and 2b, the rods 3, 4 and 5 are inserted respectively into the attachments 6, 7 and 8 and the device 1 extends horizontally over the luggage space V, fulfilling its normal function of covering this space. In order to insert luggage into and remove it from the space V, it is only necessary to disengage the rods 3 and 4 from their attachments 6 and 7 and roll up or fold back the sheet 2 towards the return rod 5. On completion of the luggage handling operations, the device 1 is replaced in the configuration illustrated in the drawings.

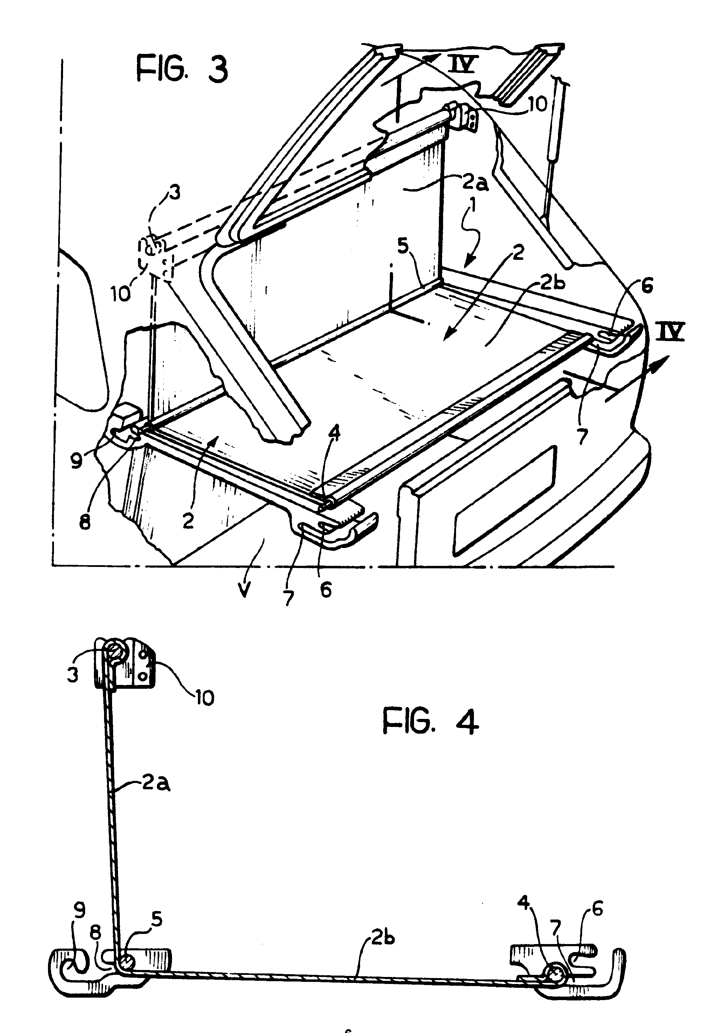

Figures 3 to 8 show the various alternative configurations which can be assumed by the device 1. In these drawings, the same reference numerals have been used as in Figures 1 and 2.

In the case of Figures 3 and 4, the device 1 is arranged in an angled configuration with the layers 2a and 2b of the sheet 2 substantially at right angles to each other. In particular, the layer 2b extends horizontally over the luggage space V, as in Figure 1, whilst the layer 2a extends vertically and acts both as an element for separating the passenger compartment of the car A and the luggage space V and as a sun-blind. In order to position the device 1 in this configuration, it is only necessary to disengage the support rod 3 from the rear attachments 6 and engage it in the upper attachments 10, as can clearly be seen in Figure 4.

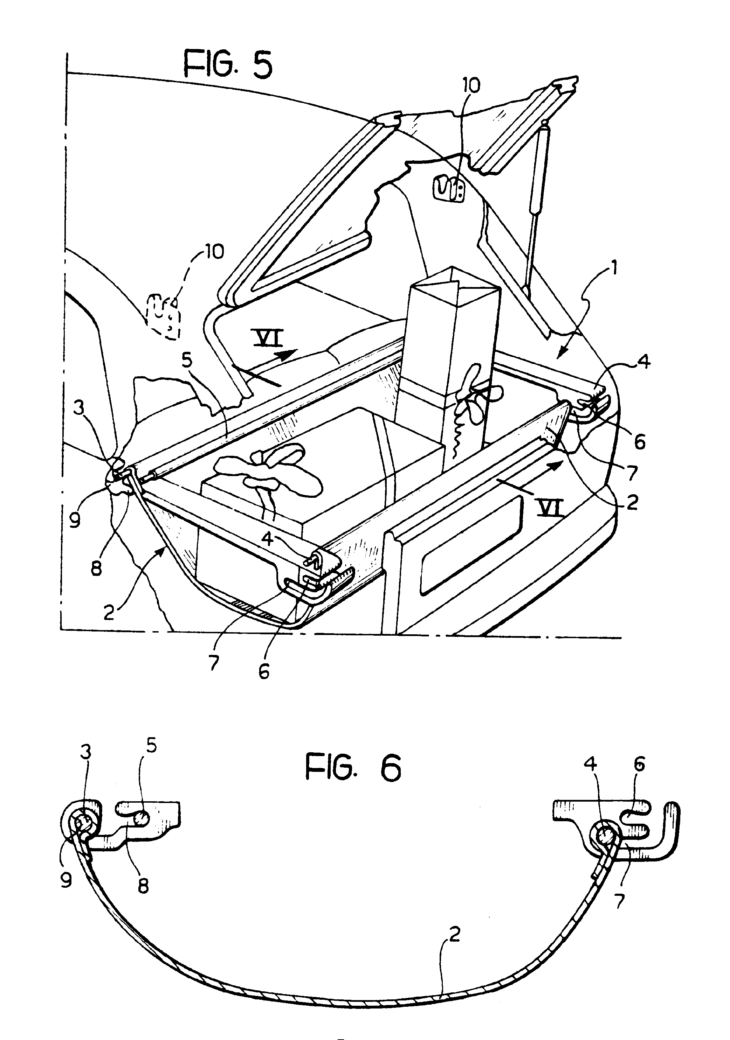

Figures 5 and 6 show the device 1 with the sheet 2 in an extended configuration in which it assumes a concave cradle-like arrangement for containing delicate loads. This configuration is obtained from that shown in Figures 1 and 2 simply by the disengagement of the rod 3 from its rear attachments 6 and its engagement in the front attachments 3. In order to ensure effective retention of the loads, the sheet 2 may incorporate a cord or elastic cord (not illustrated) along its side edges, for tightening like a bag.

Moreover, in this configuration, the device 1 may easily be removed and taken away from the car V by the disengagement of the rods 3 and 4 from their respective attachments 9 and 7 to enable easy carrying of the loads outside the car.

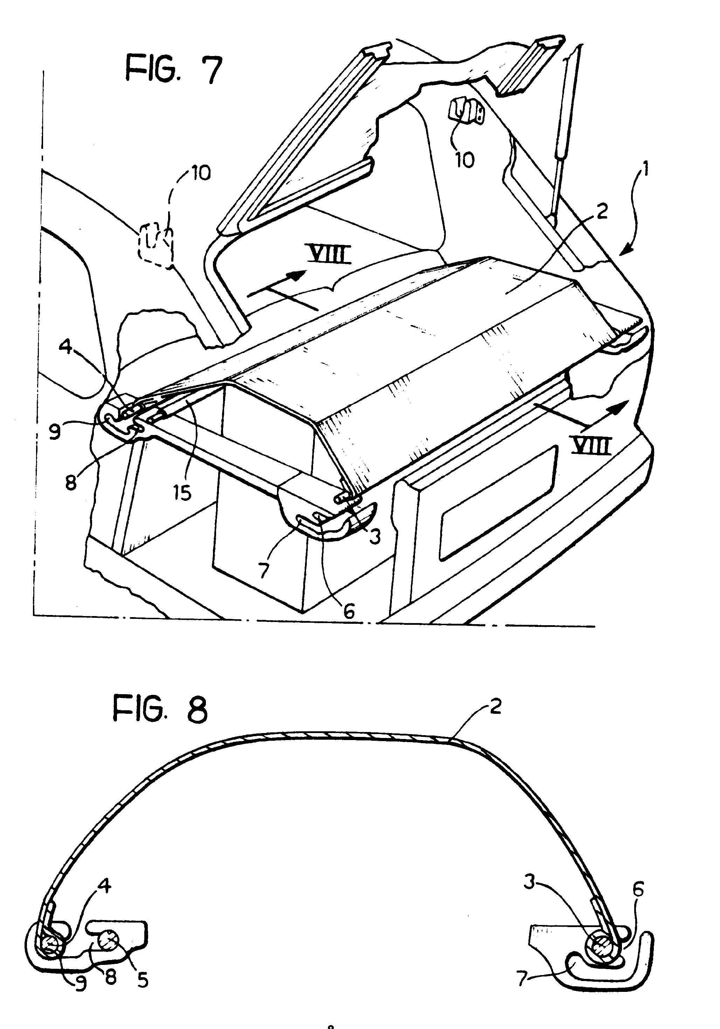

Figures 7 and 8 show the device 1 in a substantially convex or upwardly curved extended configuration for the covering of loads which are higher than the level of the sheet 2 in the configuration of Figures 1 and 2. In order to position the sheet 2 as shown in Figures 7 and 8, it is only necessary to remove the rod 4 from the attachments 7 (or the rod 3 from the attachments 6) and position it in the attachments 9.

If the height of the load is not much above the level of the sheet 2 in the normal covering position of Figures 1 and 2, the device can be kept in the configuration shown in these Figures, by virtue of the flexibility of the sheet 2 which, in this case, is slightly deformed by interference with the load.

Thus, for example, it is possible to provide further attachments (not illustrated in the drawings) for the positioning of the rods 3 and 4, and hence the sheet 2, in other alternative configurations, such as for example, a configuration in which it lies parallel to the backrest of the rear seat, or a cradle-like configuration similar to that of Figure 6 but of shorter length and therefore with less concavity of the sheet 2.

## Claims

1. A device for covering the luggage space of a two-compartment motor car, comprising a flexible sheet (2), three rigid support rods (3, 4, 5) arranged transverse the sheet (2), of which the first two (3, 4) are fitted to the ends of the sheet (2) and the third (5) acts as a return for the positioning of the sheet (2) in a folded configuration, and support means (6, 7, 8, 9, 10) for the releasable connection of the support rods (3, 4, 5) to the structure of a car (A), which are arranged at least to keep the sheet (2) in a horizontal position over the luggage space (V) in the folded configuration, with the first two rods (3, 4) situated at the rear and substantially at the same level as the third rod (5), characterised in that in the folded configuration the sheet (2) is positioned with two superimposed layers (2a, 2b) and the first two support rods (3, 4) are adjacent to each other, and in that the said support means (6, 7, 8, 9, 10) are also arranged to enable the positioning of one of the first two rods (3, 4) adjacent the third (5) to achieve an extended concave or convex configuration of the sheet (2), and to enable the positioning of one of the first two rods (3, 4) above the third (5) to achieve an angled configuration with the two layers (2a, 2b) of the flexible sheet (2) substantially at right angles.

## Patentansprüche

1. Abdeckvorrichtung für den Gepäckraum eines Kombikraftfahrzeugs mit einer flexiben Bahn (2), drei starren Haltestäben (3,4,5), die quer zu der Bahn (2) angeordnet sind und von denen die ersten beiden (3 und 4) an den Enden der Bahn (2) angebracht sind und der dritte (5) als Umlenkelement zur Positionierung der Bahn (2) in einer gefalteten Stellung dient, sowie mit Haltemitteln (6, 7, 8, 9, 10) zur lösbaren Verbindung der Tragstäbe (3, 4, 5) mit der Struktur eines Fahrzeugs (A), die so angeordnet sind, daß sie zumindest die Bahn (2) in der gefalteten Stellung in horizontaler Position über dem Gepäckraum (V) halten können, wobei die beiden ersten Stäbe (3, 4) hinten und im wesentlichen in gleicher Höhe wie der dritte Stab (5) liegen, **dadurch gekennzeichnet,** daß die Bahn (2) in der gefalteten Stellung mit zwei übereinanderliegenden Lagen (2a, 2b) positioniert ist und die beiden ersten Tragstäbe (3, 4) einander benachbart sind, und daß die genannten Haltemittel (6, 7, 8, 9, 10) ebenfalls so angeordnet sind, daß sie die Positionierung eines der beiden ersten Stäbe (3, 4) in der Nähe des dritten Stabs (5) ermöglichen, um eine ausgebreitete konkave oder konvexe Konfiguration der Bahn (2) herbeizuführen und daß sie die Positionierung eines der ersten beiden Stäbe (3, 4) über dem dritten Stab (5) ermöglichen, um eine abgewinkelte Stellung zu ermöglichen, in der die beiden Lagen (2a, 2b) der flexiblen Bahn (2) im wesentlichen einen rechten Winkel miteinander bilden.

**Revendications**

1. Dispositif destiné à recouvrir le compartiment à bagages d'un véhicule automobile à carrosserie du type à deux corps, comprenant une feuille flexible (2), trois tringles supports rigides (3, 4, 5) disposées transversalement à la feuille (2), dont les deux premières (3, 4) sont fixées aux extrémités de la feuille (2) et dont la troisième (5) se comporte comme un renvoi pour disposer la feuille (2) dans une configuration pliée, et des moyens supports (6, 7, 8, 9, 10) servant à fixer les tringles supports (3, 4, 5) à la structure d'un véhicule (A) par des liaisons démontables, moyens qui sont agencés au moins pour maintenir la feuille (2) dans une position horizontale au-dessus du compartiment à bagages (V) dans la configuration repliée, dans laquelle les deux premières tringles (3, 4) sont situées à l'extrémité arrière, sensiblement au même niveau que la troisième tringle (5), caractérisé en ce que, dans la configuration pliée, la feuille (2) est disposée de façon que deux couches (2a, 2b) soient superposées et que les deux premières tringles supports (3, 4) soient adjacentes l'une à l'autre, et en ce que lesdits moyens supports (6, 7, 8, 9, 10) sont aussi agencés pour permettre de placer l'une des deux premières tringles (3, 4) adjacente à la troisième (5) afin de donner à la feuille (2) une configuration allongée, concave ou convexe, ainsi que pour permettre de placer l'une des deux premières tringles (3, 4) au-dessus de la troisième (5) pour obtenir une configuration coudée, dans laquelle les deux couches (2a, 2b) de la feuille flexible (2) forment sensiblement un angle droit.

# FIG. 1

# FIG. 2

FIG. 3

FIG. 4

FIG. 5

FIG. 6

FIG. 7

FIG. 8